(19) Europäisches Patentamt
European Patent Office
Office européen des brevets

(11) EP 0 915 937 B1

(12) # FASCICULE DE BREVET EUROPEEN

(45) Date de publication et mention de la délivrance du brevet:
**03.04.2002 Bulletin 2002/14**

(21) Numéro de dépôt: **97931861.5**

(22) Date de dépôt: **03.07.1997**

(51) Int Cl.[7]: **C09D 183/04**, D06N 3/12, B60R 21/16

(86) Numéro de dépôt international:
**PCT/FR97/01194**

(87) Numéro de publication internationale:
**WO 98/05723 (12.02.1998 Gazette 1998/06)**

(54) **COMPOSITION SILICONE POUR L'ENDUCTION DE SUBSTRATS EN MATIERE TEXTILE**

SILIKON BESCHICHTUNGS-ZUSAMMENSETZUNG FÜR BESCHICHTUNG VON TEXTILEM SUBSTRAT

SILICONE COMPOSITION FOR COATING TEXTILE SUBSTRATES

(84) Etats contractants désignés:
**AT BE CH DE DK ES FI FR GB GR IE IT LI LU NL PT SE**

(30) Priorité: **02.08.1996 FR 9609972**
**18.04.1997 FR 9705174**

(43) Date de publication de la demande:
**19.05.1999 Bulletin 1999/20**

(73) Titulaire: **RHODIA CHIMIE**
**92408 Courbevoie Cédex (FR)**

(72) Inventeurs:
- **BOHIN, Fabrice**
**92300 Levallois-Perret (FR)**
- **POUCHELON, Alain**
**F-69330 Meyzieu (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 681 014** **EP-A- 0 718 432**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 915 937 B1

## Description

Le domaine général de l'invention est celui des compositions silicones vulcanisables à froid, en particulier celles du type bicomposant (EVF II) réticulant par hydrosilylation ou polyaddition pour produire un élastomère en couche mince. Ces compositions réticulées sont adaptées, entre autres comme revêtement, par exemple de protection ou de renfort mécanique de différents substrats en matière textile comme par exemple des supports fibreux, tissés, tricotés ou non tissés.

De tels revêtements en silicone sont généralement obtenus par enduction du substrat puis durcissement découlant de la polyaddition des groupements insaturés (alcényles, e.g. Si-Vi) d'un polyorganosiloxane sur des hydrogènes du même ou d'un autre polyorganosiloxane.

Ces compositions silicones ont trouvé un débouché important dans le revêtement des matériaux souples - tissés, tricotés ou non tissés - utilisés pour la fabrication de sacs de protection individuelle d'occupant de véhicules, dénommés également "airbag".

Pour plus de détails sur ces sacs de protection individuels ou "airbag", on peut se référer notamment au brevet français FR-A-2 668 106.

La présente invention concerne aussi l'application des silicones e.g. (EVF II) dans la fabrication de tels sacs de protection.

Traditionnellement, ces derniers sont formés par une toile en fibre synthétique, par exemple en polyamide (Nylon)®, recouverte sur au moins l'une de ces faces d'une couche d'un élastomère du type chloroprène. La présence d'une telle couche ou d'un tel revêtement de protection est dictée par le fait que les gaz libérés par le générateur de gaz (par exemple : monoxyde de carbone, NOx) en cas de choc, sont extrêmement chauds et contiennent des particules incandescentes susceptibles d'endommager le sac en Nylon®. La couche de protection interne en élastomère doit donc être particulièrement résistante aux hautes températures et aux contraintes mécaniques. Il importe également que ce revêtement élastomère se présente sous la forme d'un film fin, uniforme et parfaitement adhérent au support en tissu synthétique, formant les parois de "l'airbag".

Afin d'éviter le passage des gaz libérés par le générateur de gaz dans l'habitacle, il est important d'assurer une bonne et constante imperméabilité du sac de protection. Le revêtement élastomère doit permettre encore d'atteindre cet objectif et cela, même avec de faibles quantités déposées.

Une autre contrainte qui s'impose au revêtement élastomère est celle de la tenue au vieillissement, i.e. de la préservation dans le temps des propriétés thermiques, mécaniques et d'adhésion. Cette contrainte est d'autant plus aiguë que les sacs de protection individuelle sont stockés sous forme pliée dans les véhicules automobiles, avant leur éventuelle expansion salvatrice en cas d'accident.

Comme autre critère, et qui n'est pas négligeable, on fera noter que le revêtement de protection ne doit pas poser de problèmes au regard de la fabrication par couture de "l'airbag".

Les compositions silicones ont aisément supplanté les chloroprènes dans cette application, car il s'est avéré que ces derniers ne répondent pas de façon satisfaisante à toutes les spécifications susvisées. Des compositions utilisables, pour application au sac gonflable de protection individuelle dans les automobiles, sont décrits notamment dans EP-A-0 533 840 et US-A-5 296 298.

Selon EP-A-0 553 840, ces compositions silicones connues comprennent :

- (A) un polydiorganosiloxane ayant au moins deux groupements alcényles par molécule,
- (B) un polyorganohydrogénosiloxane ayant au moins deux atomes d'hydrogène liés au silicium dans chaque molécule,
- (C) un catalyseur métallique du groupe du platine,
- (D) un promoteur d'adhérence consistant dans un composé organosilicié époxy-fonctionnel,
- (E) une charge inorganique,
- (F) une résine polyorganosiloxane,
- (G) et éventuellement un composé utile comme inhibiteur de réticulation.

Dans US-A-5 296 298, on rencontre à nouveau les constituants (A) à (E) précités, mais on note que le promoteur d'adhérence (D) consiste ici dans l'association d'un composé organosilicié époxy-fonctionnel avec un silane alcoxylé contenant, par molécule, un groupe (méth)acryle ou (méth)acryloxy et éventuellement avec un chélate d'aluminium, tandis que, la charge inorganique (E) est présentée comme optionnelle, bien qu'elle soit mise en oeuvre dans tous les exemples 1 à 20 illustrant l'invention.

Les compositions silicones connues précitées souffrent cependant de l'inconvénient de ne pas adhérer suffisamment au tissu en polyamide du sac, pour garantir une fiabilité optimale, ö combien importante en matière de sécurité routière.

Il est du mérite de la Demanderesse d'avoir proposé dans le document EP-A-0 681 014 une solution qui vise

à remédier aux inconvénients de l'art antérieur. La problématique à la base de l'invention revendiquée dans cet autre document de l'état de la technique est l'obtention d'une composition silicone, applicable notamment comme revêtement interne "d'airbag" et présentant à cette fin les propriétés les plus favorables en matière notamment de résistance au feu et à la température, de propriétés mécaniques, de tenue au vieillissement, d'adhérence et d'uniformité de surface, l'adhérence sur des substrats en matière textile étant plus particulièrement recherchée. La solution proposée par cette invention consiste à mettre en oeuvre :

- une composition silicone d'enduction du type de celles vulcanisables à froid (EVF) consistant dans le mélange formé de :

  (I) au moins un polyorganosiloxane présentant, par molécule, au moins deux groupes alcényles, en $C_2$-$C_6$ liés au silicium,
  (II) au moins un polyorganosiloxane présentant, par molécule, au moins deux atomes d'hydrogène liés au silicium,
  (III) une quantité catalytiquement efficace d'au moins un catalyseur, composé d'au moins un métal appartenant au groupe du platine,
  (IV) un promoteur d'adhérence,
  (V) éventuellement une charge minérale,
  (VI) éventuellement au moins un inhibiteur de réticulation,
  (VII) et éventuellement au moins une résine polyorganosiloxane,

- dans laquelle le promoteur d'adhérence est constitué exclusivement par l'association au moins ternaire des ingrédients suivants :

  (IV.1) au moins un organosilane alcoxylé contenant, par molécule, au moins un groupe alcényle en $C_2$ - $C_6$,
  (IV.2) au moins un composé organosilicié comprenant au moins un radical époxy,
  (IV.3) au moins un chélate de métal M et/ou un alcoxyde métallique de formule générale : M(OJ)n, avec n = valence de M et J = alkyle linéaire ou ramifié en $C_1$ - $C_8$,
  M étant choisi dans le groupe formé par : Ti, Zr, Ge, Li, Mn, Fe, Al et Mg.

Une charge renforçante telle qu'une silice de pyrogénation est toujours présente dans la partie expérimentale du document EP-A-0 681 014.

Dans certaines applications, en particulier pour la fabrication des "airbags", pour des raisons de compétitivité économique, on cherche à appliquer des couches très fines de silicone. La Demanderesse a constaté que les compositions d'enduction comprenant une charge de renfort ne permettent pas d'obtenir facilement, par la technique classique de type racle, des poids de dépôt de la couche d'enduction très faibles comme par exemple ceux inférieurs à une valeur de l'ordre de 30 g/m$^2$.

Un objectif de la présente invention est de proposer une nouvelle composition silicone d'enduction qui permette de réduire le poids de dépôt de la couche d'enduction, sans pour autant changer la technique d'enduction, ni la conduite de la machine correspondante.

Un autre objectif de la présente invention est de fournir une nouvelle composition silicone d'enduction qui permette d'obtenir des revêtements dont le poids de dépôt peut facilement être réduit, jusqu'à atteindre au besoin une valeur aussi faible que celle inférieure à environ 30 g/m$^2$.

Un autre objectif encore de la présente invention est de fournir une nouvelle composition silicone d'enduction qui permette d'obtenir, en comparaison avec ce qui se passe avec des compositions chargées conformes au document EP-A-0 681 014 et présentant le même faible poids de dépôt, des propriétés du substrat enduit, notamment en matières de :

- résistance au feu et à la température, qui sont pour le moins équivalentes,
- résistance au froissement et à l'abrasion (test "scrub"), qui sont améliorées,
- résistance au déchirement, qui sont également améliorées,
- isolation thermique, qui sont aussi améliorées.

Ces objectifs, parmi d'autres,. sont atteints par la présente invention qui consiste à sélectionner, parmi l'ensemble des possibilités offertes dans le document EP-A-0 681 014, les compositions silicones d'enduction, comprenant un promoteur d'adhérence comportant exclusivement les ingrédients indiqués dans cet art antérieur, qui ne sont pas chargées et renferment obligatoirement une résine polyorganosiloxane.

Plus précisément, la présente invention, prise dans un premier objet, concerne une composition d'enduction

du type de celles vulcanisables à froid (EVF), caractérisée en ce qu'elle est dépourvue de toute charge minérale de renfort et qu'elle consiste dans le mélange formé de :

(1) au moins un polyorganosiloxane présentant, par molécule, au moins deux groupes alcényles, en C2-C6 liés au silicium,
(2) au moins un polyorganosiloxane présentant, par molécule, au moins deux atomes d'hydrogène liés au silicium,
(3) une quantité catalytiquement efficace d'au moins un catalyseur, composé d'au moins un métal appartenant au groupe du platine,
(4) un promoteur d'adhérence comportant exclusivement :

(4.1) au moins un organosilane alcoxylé contenant, par molécule, au moins un groupe alcényle en $C_2$ - $C_6$,
(4.2) au moins un composé organosilicié comprenant au moins un radical époxy,
(4.3) au moins un chélate de métal M et/ou un alcoxyde métallique de formule générale : M(OJ)n, avec n = valence de M et J = alkyle linéaire ou ramifié en $C_1$ - $C_8$,
M étant choisi dans le groupe formé par : Ti, Zr, Ge, Li, Mn, Fe, Al et Mg,

(5) au moins une résine polyorganosiloxane,
(6) et éventuellement au moins un inhibiteur de réticulation.

Il s'agit d'une composition sans solvant.
Conformément à une disposition préférée de l'invention, l'organosilane alcoxylé (4.1) du promoteur (4) est plus particulièrement sélectionné parmi les produits de formule générale suivante :

(4.1)

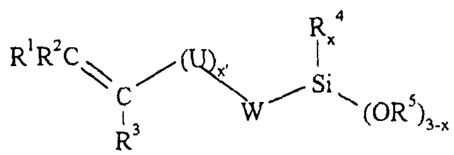

dans laquelle:

- $R^1$, $R^2$, $R^3$ sont des radicaux hydrogénés ou hydrocarbonés identiques ou différents entre eux et représentent, de préférence, l'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$ - $C_4$,
- W est un lien valentiel,
- $R^4$ et $R^5$ sont des radicaux identiques ou différents et représentent un alkyle en $C_1$ - $C_4$ linéaire ou ramifié,
- x' = 0 ou 1,
- x = 0 à 2, de préférence 0 ou 1 et plus préférentiellement encore 0.

Sans que cela soit limitatif, il peut être considéré que le vinyltriméthoxysilane est un composé (4.1) particulièrement approprié.
S'agissant du composé organosilicié (4.2), il est prévu conformément à l'invention, de le choisir

- soit parmi les produits (4.2a) répondant à la formule générale suivante :

(4.2a)

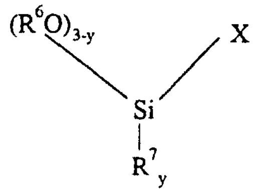

dans laquelle :

- $R^6$ est un radical alkyle linéaire ou ramifié en $C_1$ - $C_4$,

- $R^7$ est un radical alkyle linéaire ou ramifié,
- y est égal à 0, 1, 2 ou 3, de préférence à 0 ou 1 et, plus préférentiellement encore à 0,

X =

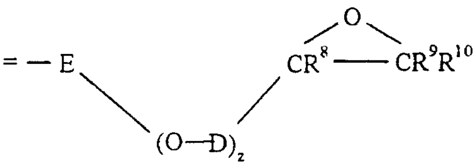

avec

- Δ E et D qui sont des radicaux identiques ou différents choisis parmi les alkyles en $C_1$-$C_4$ linéaires ou ramifiés,
- Δ z qui est égal à 0 ou 1,
- Δ $R^8$, $R^9$, $R^{10}$ qui sont des radicaux identiques ou différents représentant l'hydrogène ou un alkyle linéaire ou ramifié en $C_1$-$C_4$, l'hydrogène étant plus particulièrement préféré,
- Δ $R^8$ et $R^9$ ou $R^{10}$ pouvant alternativement constituer ensemble et avec les deux carbones porteurs de l'époxy, un cycle alkyle ayant de 5 à 7 chaînons,

- soit parmi les produits (4.2b) constitués par des polydiorganosiloxanes époxyfonctionnels comportant

  (i) au moins un motif siloxyle de formule :

$$X_p\ G_q\ SiO_{\frac{4-(p+q)}{2}} \qquad (IV.2\ b_1)$$

dans laquelle :

- X est le radical tel que défini ci-dessus pour la formule (IV.2 a)
- G est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- p = 1 ou 2,
- q = 0, 1 ou 2,
- p + q = 1, 2 ou 3,

  et (2i) éventuellement au moins un motif siloxyle de formule :

$$G_r\ SiO_{\frac{4-r}{2}} \qquad (IV.2\ b_2)$$

dans laquelle G a la même signification que ci-dessus et r a une valeur comprise entre 0 et 3, par exemple entre 1 et 3.

Les composés (4.2) sont préférentiellement des époxyalcoxymonosilanes (IV.2 a).

A titre d'exemple de tels composés (IV.2 a) on peut citer :

- le 3-glycidoxypropyltriméthoxysilane (GLYMO)
- ou le 3,4-époxycyclohexyléthyltriméthoxysilane.

En ce qui concerne le dernier composé essentiel (4.3) du promoteur d'adhérence (4) de la composition silicone (EVF) selon l'invention, les produits préférés sont ceux dans lesquels le métal M est choisi dans la liste suivante : Ti, Zr, Ge, Li, Mn. Il est à souligner que le titane est plus particulièrement préféré. On peut lui associer, par exemple, un radical alkoxy de type butoxy.

Selon l'invention, une combinaison avantageuse pour former le promoteur d'adhérence est la suivante:

vinyltriméthoxysilane (VTMS) / 3-glycidoxypropyltriméthoxysilane (GLYMO)/titanate de butyle.

Sur le plan quantitatif, il peut être précisé que les proportions pondérales entre (4.1), (4.2) et (4.3), exprimées en pourcentages en poids par rapport au total des trois, sont les suivantes :

(4.1) ≥ 10, de préférence compris entre 15 et 70 et plus préférentiellement encore entre 25 à 65,
(4.2) ≤ 90, de préférence compris entre 70 et 15 et plus préférentiellement encore entre 65 à 25,
(4.3) ≥ 1, de préférence compris entre 5 et 25 et plus préférentiellement encore entre 8 à 18,

étant entendu que la somme de ces proportions en (4.1), (4.2), (4.3) est égale à 100%.

Il a pu être décelé une corrélation, d'une part, entre les performances d'adhérence et de structure du revêtement silicone, et d'autre part, le ratio pondéral (4.2) : (4.1). Ainsi, ce ratio est de préférence compris entre 2 : 1 et 0,5 : 1, le ratio 1 : 1 étant plus particulièrement préféré.

Avantageusement, le promoteur d'adhérence est présent à raison de 0,1 à 10, de préférence 0,5 à 5 et plus préférentiellement encore 1 à 3 % en poids par rapport à l'ensemble des constituants de la composition.

La composition selon l'invention comprend obligatoirement, en outre, au moins une résine polyorganosiloxane (5) comportant au moins un reste alcényle dans sa structure, et cette résine présente une teneur pondérale en groupe (s) alcényle(s) comprise entre 0,1 et 20 % en poids et, de préférence, entre 0,2 et 10 % en poids.

Ces résines sont des oligomères ou polymères organopolysiloxanes ramifiés bien connus et disponibles dans le commerce. Elles se présentent sous la forme de solutions, de préférence siloxaniques. Elles présentent, dans leur structure, au moins deux motifs différents choisis parmi ceux de formule $R_3SiO_{0,5}$ (motif M), $R_2SiO$ (motif D), $RSiO_{1,5}$ (motif T) et $SiO_2$ (motif Q), l'un au moins de ces motifs étant un motif T ou Q.

Les radicaux R sont identiques ou différents et sont choisis parmi les radicaux alkyles linéaires ou ramifiés en $C_1$ - $C_6$, les radicaux alcényles en $C_2$-$C_4$ phényle, trifluoro-3,3,3 propyle. On peut citer par exemple : comme radicaux R alkyles, les radicaux méthyle, éthyle, isopropyle, tertiobutyle et n-hexyle, et comme radicaux R alcényles, les radicaux vinyles.

On doit comprendre que dans les résines (5) du type précité, une partie des radicaux R sont des radicaux alcényles.

Comme exemples d'oligomères ou de polymères organopolysiloxanes ramifiés on peut citer les résines MQ, les résines MDQ, les résines TD et les résines MDT, les fonctions alcényles pouvant être portées par les motifs M, D et/ou T. Comme exemple de résines qui conviennent particulièrement bien, on peut citer les résines MDQ vinylées ayant une teneur pondérale en groupe vinyle comprise entre 0,2 et 10 % en poids.

Ce composé (5), a pour fonction d'accroître la résistance mécanique du revêtement élastomère silicone ainsi que son adhérence, dans le cadre de l'enduction des faces d'un tissu synthétique (par exemple en polyamide), cousu pour former des "airbags". Cette résine de structure est avantageusement présente dans une concentration comprise entre 10 et 70 % en poids par rapport à l'ensemble des constituants de la composition, de préférence entre 30 et 60 % en poids et, plus préférentiellement encore, entre 40 et 60 % en poids.

De manière particulièrement préférée, la résine polyorganosiloxane (5) comprendra au moins 2 % en poids de motifs $SiO_2$ (motifs Q), notamment de 4 à 14 %, préférentiellement de 5 % à 12 %.

Le polyorganosiloxane (1) est pondéralement l'un des constituants essentiel de la composition selon l'invention. Avantageusement, Il s'agit d'un produit comportant

(i) des motifs siloxyles de formule :

$$T_aZ_b\ SiO_{\frac{4-(a+b)}{2}} \qquad (1.1)$$

dans laquelle :

- T est un groupe alcényle, de préférence vinyle ou allyle,
- Z est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle, tolyle et phényle,
- a est 1 ou 2, b est 0, 1 ou 2 et a + b est compris entre 1 et 3, de préférence entre 2 et 3,
  et (2i) éventuellement des autres motifs siloxyles de formule :

$$Z_C\ SiO_{\frac{4-c}{2}} \qquad (1.2)$$

dans laquelle Z a la même signification que ci-dessus et c a une valeur comprise entre 0 et 3, de préférence entre 2 et 3.

Il est avantageux que ce polydiorganosiloxane ait une viscosité au moins égale à 1000 mPa.s et de préférence comprise entre 5.000 et 200.000 mPa.s.

Plus préférentiellement, cette viscosité sera comprise entre 10.000 et 200.000 mPa.s, notamment entre 30.000 et 170.000, en particulier entre 40.000 et 120.000. Bien entendu, en cas de mélange de plusieurs huiles (1) de viscosité différentes, on prend en compte la viscosité du mélange.

Toutes les viscosités dont il est question dans le présent mémoire correspondent à une grandeur de viscosité dynamique qui est mesurée, de manière connue en soi, à 25°C.

Le polyorganosiloxane (1) peut être uniquement formé de motifs de formule (1.1) ou peut contenir, en outre, des motifs de formule (1.2). De même, il peut présenter une structure linéaire ramifiée cyclique ou en réseau.

Z est généralement choisi parmi les radicaux méthyle, éthyle et phényle, 60 % molaire (ou en nombre) au moins des radicaux Z étant des radicaux méthyle.

Des exemples de motifs siloxyles de formule (1.1) sont le motif vinyldiméthylsiloxyle, le motif vinylphénylméthylsiloxyle, le motif vinylméthylsiloxyle et le motif vinylsiloxyle.

Des exemples de motifs siloxyles de formule (1.2) sont les motifs $SiO_{4/2}$, diméthylsiloxyle, méthylphénylsiloxyle, diphénylsiloxyle, méthylsiloxyle et phénylsiloxyle.

Des exemples de polyorganosiloxanes (1) sont des composés linéaires et cycliques comme : les diméthylpolysiloxanes à extrémités diméthylvinylsilyles, les copolymères (méthylvinyl) (diméthyl) polysiloxanes à extrémités triméthylsilyles, les copolymères (méthylvinyl) (diméthyl) polysiloxanes à extrémités diméthylvinylsilyles ; les méthylvinylpolysiloxanes cycliques.

Le polyorganosiloxane (2) est de préférence du type de ceux comportant :

(i) des motifs siloxyles de formule :

$$H_d\, L_e\, SiO_{\frac{4-(d+e)}{2}} \qquad (2.1)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle, tolyle et phényle,
- d est 1 ou 2, e est 0, 1 ou 2, d + e a une valeur comprise entre 1 et 3, de préférence entre 2 et 3,
  et (2i) éventuellement des autres motifs siloxyles de formule moyenne :

$$L_g\, SiO_{\frac{4-g}{2}} \qquad (2.2)$$

dans laquelle L a la même signification que ci-dessus et g a une valeur comprise entre 0 et 3, de préférence entre 2 et 3.

La viscosité dynamique de ce polyorganosiloxane (2) est au moins égale à 10 mPa.s et, de préférence elle est comprise entre 20 et 1000 mPa.s.

Le polyorganosiloxane (2) peut être uniquement formé de motifs de formule (2.1) ou comporter en plus des motifs de formule (2.2).

Le polyorganosiloxane (2) peut présenter une structure linéaire ramifiée cyclique ou en réseau.

Le groupe L a la même signification que le groupe Z ci-dessus.

Des exemples de motifs de formule (2.1) sont :

$$H(CH_3)_2SiO_{1/2}, \quad HCH_3SiO_{2/2}, \quad H(C_6H_5)SiO_{2/2}$$

Les exemples de motifs de formule (2.2) sont les mêmes que ceux donnés plus haut pour les motifs de formule (1.2).

Des exemples de polyorganosiloxane (2) sont des composés linéaires et cycliques comme :

- les diméthylpolysiloxanes à extrémités hydrogénodiméthylsilyle,
- les copolymères à motifs (diméthyl) (hydrogénométhyl) polysiloxanes à extrémités triméthylsilyles,

- les copolymères à motifs (diméthyl) (hydrogénométhyl) polysiloxanes à extrémités hydrogénodiméthylsilyles,
- les hydrogénométhylpolysiloxanes à extrémités triméthylsilyles,
- les hydrogénométhylpolysiloxanes cycliques.

Le rapport du nombre d'atomes d'hydrogène liés au silicium dans le polyorganosiloxane (2) sur le nombre total de groupes à insaturation alcényle du polyorganosiloxane (1) et de la résine (5) est compris entre 0,4 et 10, de préférence entre 0,6 et 5.

Les bases de compositions silicones polyaddition peuvent ne comporter que des polyorganosiloxane (1) et (2) linéaires comme, par exemple, celles décrites dans les brevets : US-A-3 220 972, US-A-3 697 473 et US-A-4 340 709 ou comporter à la fois des polyorganosiloxane (1) et (2) ramifiés ou en réseau, comme par exemple celles décrites dans les brevets : US-A-3 284 406 et US-A-3 434 366.

De préférence, on met en oeuvre :

- au moins un polyorganosiloxane (1) linéaire comportant des chaînes formées de motifs de formule (1.2) où c = 2, bloquées à chacune de leurs extrémités par des motifs de formule (1.1) où a = 1 et b = 2, et
- au moins un polyorganosiloxane (2) linéaire comportant dans sa structure au moins trois atomes d'hydrogène liés au silicium, situés dans les chaînes et/ou en bouts de chaînes.

De manière très préférée on met en oeuvre :

- au moins un polyorganosiloxane (1) linéaire comportant des chaînes formées de motifs de formule (1.2) où c = 2, bloquées à chacune de leurs extrémités par des motifs de formule (1.1 ) où a = 1 et b = 2, et
- au moins un polyorganosiloxane (2) linéaire comportant des chaînes formées de motifs de formule (2.1) où d = 1 et e = 1 et éventuellement de motifs de formule (2.2) où g = 2, bloquées à chacune de leurs extrémités par des motifs de formule (2.1) où d = 1 et e = 2.

Les catalyseurs (3) sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (3), calculée en poids de platine-métal, est généralement comprise entre 2 et 400 ppm; de préférence entre 5 et 200 ppm basés sur le poids total des polyorganosiloxanes (1) et (2).

Avantageusement, la composition silicone selon l'invention peut en outre comprendre au moins un ralentisseur (6) de la réaction d'addition (inhibiteur de réticulation), choisi parmi les composés suivants :

- polyorganosiloxanes substitués par au moins un alcényle pouvant se présenter éventuellement sous forme cyclique, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

$$R' - (R'') C (OH) - C \equiv CH$$

formule dans laquelle,

- R' est un radical alkyle linéaire ou ramifié, ou un radical phényle ;
- R" est H ou un radical alkyle linéaire ou ramifié, ou un radical phényle ; les radicaux R', R" et l'atome de carbone situé en $\alpha$ de la triple liaison pouvant éventuellement former un cycle ;

le nombre total d'atomes de carbone contenu dans R' et R" étant d'au moins 5, de préférence de 9 à 20.

Lesdits alcools sont, de préférence, choisis parmi ceux présentant un point d'ébullition supérieur à 250° C.

On peut citer à titre d'exemples :

- l'éthynyl-1-cyclohexanol-1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-2 butyne-3 ol-2 ;
- le méthyl-3 pentadécyne-1 ol-3.

Ces alcools $\alpha$-acétyléniques sont des produits du commerce.

Un tel ralentisseur (6) est présent à raison de 3 000 ppm au maximum, de préférence à raison de 100 à 1000 ppm par rapport au poids total des organopolysiloxanes (1) et (2).

De manière connue en soi, la composition élastomère silicone peut être additionnée d'un ou plusieurs additif (s) classique(s) comme par exemple les colorants.

Selon un autre de ces aspects, la présente invention est relative à un système précurseur bicomposant de la composition silicone décrite supra. Un tel système précurseur se présente en deux parties A et B distinctes, destinées à être mélangées pour former la composition, l'une de ces parties A ou B comprenant le catalyseur (3) et une seule espèce (1) ou (2) de polyorganosiloxane. Une autre caractéristique de ce système précurseur est que sa partie A ou B contenant le polyorganosiloxane (2) est exempt de composés (4.3) du promoteur (4) et que sa partie A ou B incluant le composé (4.1) du promoteur (4) ne comprend pas le catalyseur (3). Une autre caractéristique encore de ce système précurseur est que la résine (5) peut être mise en oeuvre dans la partie A ou la partie B ou dans les deux parties A et B, le catalyseur (3) ne devant pas être présent dans la partie A ou B contenant le polyorganosiloxane (2) et la résine (5).

C'est ainsi que la partie A peut, par exemple, contenir une partie du polyorganosiloxane (1), le polyorganosiloxane (2), les composés (4.1) et (4.2) du promoteur (4), une partie de la résine (5) et éventuellement l'inhibiteur (6) de réticulation ; tandis que la partie B peut, par exemple, contenir la partie restante du polyorganosiloxane (1), le catalyseur (3), le composé (4.3) du promoteur (4), la partie restante de la résine (5) et éventuellement une base colorante.

La viscosité des parties A et B et de leur mélange peut être ajustée en jouant sur les quantités des constituants et en choisissant les polyorganosiloxanes de viscosité différente.

Une fois mélangées l'une à l'autre les parties A et B forment une composition silicone (EVF II) prête à l'emploi, qui peut être appliquée sur le support par tout moyen d'enduction approprié (par exemple racle ou cylindre).

Bien que la réticulation de la composition appliquée sur le support à revêtir puisse être opérée à froid (c'est-à-dire à une température voisine de la température ambiante = 23°C), on fera noter que les composés selon l'invention peuvent aussi être réticulés par voie thermique et/ou par rayonnement électromagnétique (rayonnement d'électrons accélérés ou "électron beam").

Les compositions selon l'invention peuvent être utilisées pour le revêtement ou l'enduction de supports fibreux tissés, tricotés ou non tissés, et, de préférence de supports tissés, tricotés ou non tissés en fibres synthétiques, avantageusement en polyester ou en polyamide.

L'invention vise plus particulièrement le revêtement ou l'enduction d'au moins une des faces du matériau support souple (tissu en polyamide par exemple) utile pour la fabrication par couture de sacs gonflables pour la protection individuelle d'occupants de véhicules, en cas de choc.

Dans ce contexte, les compositions selon l'invention se révèlent remarquables non seulement pour l'enduction de supports classiquement utilisés dans la fabrication des sacs gonflables, mais aussi pour l'enduction à cette fin de supports à contexture ouverte. Par support à contexture ouverte, on entend les supports de porosité > 15 $l/dm^2/min$ selon la norme DIN 53 887. Dans le cas d'un tissu, on peut notamment définir la contexture ouverte comme correspondant à un nombre de fils de chaîne et de trame par centimètre dont la somme est inférieure ou égale à 36.

Comme tissus particulièrement recommandés dans le cadre de la présente invention, on citera de manière générale les tissus dont le poids à l'état non enduit est inférieur à 200 $g/m^2$ et notamment inférieure ou égal à 160 $g/m^2$. On peut ainsi citer de tels tissus, notamment en polyamide, ayant de 16 x 16 à 18 x 18 fils/cm, par exemple les tissus de 470 dtex (decitex) ayant ces caractéristiques.

On notera que l'on pourra aussi utiliser des substrats, notamment tissus, formés de fibres textiles techniques, c'est-à-dire de fibres textiles présentant des propriétés améliorées par rapport aux fibres classiques, par exemple ténacité accrue, afin de conférer des propriétés particulières ou renforcées en fonction des applications du support ou tissu enduit.

La demanderesse a pu démontrer que l'invention permettait d'obtenir des élastomères vuicanisables à froid qui, une fois réticulés, peuvent posséder les caractéristiques suivantes :

- densité < 1,1 (peut être mesurée par exemple par pesée d'un volume connu ou par picnométrie ou colonne à gradient) ;
- conductivité thermique à 23°C (ASTM D2326-70) ≤ 0,18 W/m.K ;
- propriété élastique représentée par le rapport entre la résistance à la rupture (en mPa, selon la norme 53504) de l'élastomère réticulé et l'allongement à la rupture (en %, selon la norme 53504) de l'élastomère réticulé, ce rapport étant < 0,02 ;
- adhérence (NFG 37110) Scrub ≥ 400.

Les meilleures performances sont obtenues dans le cas de compositions comprenant de l'huile (1) de viscosité comprise entre 10.000 et 200.000 mPa.s, notamment entre 30.000 et 170.000, en particulier entre 40.000 et 120.000, et résine (5) comprenant des motifs Q, notamment au moins 2 % en poids de tels motifs, en particulier de 4 à 14 %, préférentiellement de 5 % à 12 %.

La densité obtenue par la composition selon l'invention permet de réaliser de l'enduction en couche mince, avantageusement inférieure ou égale à 30 g/m$^2$, notamment comprise entre 15 et 30 g/m$^2$, de préférence de l'ordre de 25 g/m$^2$. La caractéristique élastique de l'élastomère permet d'augmenter considérablement la résistance à la déchirure du textile enduit. La faible conductivité thermique de l'élastomère confère au tissu enduit une protection thermique de premier ordre même avec une aussi faible épaisseur d'enduction.

D'autres propriétés comme la pliabilité, l'adhésion de l'élastomère au tissu, l'imperméabilité aux gaz, la résistance au froissement et à l'abrasion, la tenue au vieillissement et l'aptitude et la tenue à la couture sont aussi d'un niveau très élevé.

On peut notamment indiquer que l'invention permet d'obtenir un support enduit présentant :

- résistance à la déchirure supérieure ou égale à 400 N (norme ASTM D 1682),
- protection thermique du tissu améliorée de 30 % par rapport à un silicone standard de densité supérieure, pour un même poids de dépôt ;
- porosité (DIN 53 887) < 2 l/dm$^2$/min.

La présente invention a donc aussi pour objet l'utilisation d'une composition ou de son système précurseur tels que décrits ci-dessus, pour le revêtement ou l'enduction de supports fibreux tissés, tricotés ou non tissés, notamment en fibres synthétiques, avantageusement en polyester ou polyamide.

Suivant un mode de réalisation avantageux, l'invention vise l'enduction d'un tissu à contexture ouverte selon la définiton donnée plus haut.

L'invention a donc aussi pour objet un tel support fibreux enduit conformément à l'invention et pouvant donc présenter les caractéristiques et propriétés indiquées plus haut.

De préférence, le support fibreux est un tissu à contexture ouverte. De préférence, la composition comprend une huile (1) de viscosité comprise entre 10.000 et 200.000, de préférence entre 30.000 et 170.000, plus préférentiellement encore entre 40.000 et 120.000 mPa.s à 25°C, et une résine (5) comportant des motifs Q, de préférence au moins 2 % en poids, notamment de 4 à 14 %, plus préférentiellement encore de 5 % à 12 %. De préférence encore, le poids d'élastomère déposé est inférieur ou égal à 30 g/m$^2$, notamment de l'ordre de 25 g/m$^2$. Le support enduit présente avantageusement un poids inférieur ou égal à 200 g/m$^2$.

Grâce aux propriétés et caractéristiques indiquées avant, on peut réaliser des sacs gonflables de protection individuelle des occupants d'un véhicule à partir de tissus à contexture ouverte comme décrits ci-dessus, en particulier tissus de polyamide ou de polyester, qui une fois enduits, ont un poids inférieur ou égal à 200 g/m$^2$, et possédant par ailleurs des propriétés optimales notamment de résistance à la déchirure, de protection thermique, de porosité et de pliabilité. Cela permet de réaliser des sacs gonflables plus légers, plus performants et moins coûteux que les sacs réalisés à partir de tissus non enduits ou de tissus enduits de l'art antérieur.

L'invention a aussi pour objet l'utilisation d'une composition silicone, notamment du type vulcanisable à froid ou à chaud, réticulant en un élastomère présentant une densité < 1,1, une conductivité thermique à 23°C ≤ 18 W/m.K et dont le rapport entre la résistance à la rupture et l'allongement à la rupture est < 0,02, pour l'enduction d'un substrat fibreux tissé, tricoté ou non tissé, notamment en vue de la réalisation de sacs gonflables pour la protection d'occupants de véhicules. L'invention vise là notamment l'enduction de substrats à contexture ouverte selon la définition donnée plus haut, de préférence avec une épaisseur d'élastomère inférieure ou égale à 30 g/m$^2$, en particulier de l'ordre de 25 g/m$^2$, notamment de façon à obtenir un substrat enduit de poids inférieur ou égal à 200 g/m$^2$. L'invention vise aussi les supports fibreux enduits ainsi obtenus.

L'invention vise en particulier le revêtement ou l'enduction d'au moins une des faces du matériau support souple (tissu en polyamide par exemple) utile pour la fabrication par couture de sacs gonflables pour la protection individuelle d'occupants de véhicules, en cas de choc.

Il est bien entendu toutefois que l'invention n'y est pas limitée et peut être mise en oeuvre dans toute'application recherchant des propriétés similaires. On peut citer par exemple les toiles de tente, toiles de parachute et analogues qui pourront aussi mettre à profit certaines des propriétés susdites alliées à la légèreté.

De manière générale, l'enduction dont il s'agit ici peut correspondre au dépôt d'une couche unique sur au moins une des faces du matériau support souple (enduction primaire). Mais il peut s'agir encore du dépôt d'une seconde couche ou éventuellement d'une troisième couche sur au moins une des faces du matériau support déjà enduit (enduction secondaire) pour avoir au total l'épaisseur voulue garantissant les meilleures performances possibles en matière d'imperméabilité.

Les exemples, qui suivent, de préparation de la composition et de son application comme revêtement de tissu en polyamide, permettront de mieux comprendre l'invention et de faire ressortir ses avantages et ses variantes de réalisation. Les performances de la composition de l'invention seront mises en exergue par des tests comparatifs.

**EXEMPLES :**

Dans ces exemples, la viscosité est mesurée à l'aide d'un viscosimètre BROOKFIELD selon les indications de la norme AFNOR NFT 76 106 de mai 82.

**Exemple 1 :**

Exemple de préparation de compositions

1.- Préparation d'une composition silicone non chargée selon l'invention (composition C1) :

1.1 - Préparation de la partie A du bicomposant :

Dans un réacteur, à température ambiante, on mélange :

- 48 parties en poids de résine (5) de structure $MM^{Vi}DD^{Vi}Q$ contenant 0,6 % en poids de groupes vinyles (Vi) et constituée de 17 % en poids de motifs $(CH_3)_3SiO_{0,5}$, 0,5 % en poids de motifs $(CH_3)_2ViSiO_{0,5}$, 75 % en poids de motifs $(CH_3)_2SiO$, 1,5 % en poids de motifs $(CH_3)ViSiO$ et 6 % en poids de motifs $SiO_2$ [constituant dénommé ci-après résine (5)] ;
- 30 parties en poids d'un polyorganosiloxane (1) consistant dans une huile polydiméthylsiloxane bloquée à chacune des extrémités des chaînes par un motif $(CH_3)_2ViSiO_{0,5}$, ayant une viscosité de 100.000 mPa.s et contenant 0,003 fonction Si-Vi pour 100 g d'huile [constituant dénommé ci-après huile (1) de haute viscosité] ;
- 15 parties en poids d'un polyorganosiloxane (1) consistant dans une huile polydiméthylsiloxane bloquée à chacune des extrémités des chaînes par un motif $(CH_3)_2ViSiO_{0,5}$, ayant une viscosité de 10.000 mPa.s et contenant 0,005 reste Si-Vi pour 100 g d'huile [constituant dénommé ci-après huile (1) de basse viscosité] ;
- 5 parties en poids d'un polyorganosiloxane (2) consistant dans une huile poly(diméthyl) (hydrogénométhyl) siloxane bloquée à chacune des extrémités des chaînes par un motif $(CH_3)_2HSiO_{0,5}$, ayant une viscosité de 25 mPa.s et contenant au total 0,7 fonction Si-H pour 100 g d'huile (dont 0,6 fonction Si-H situé dans la chaîne) [constituant dénommé ci-après huile (2)] ;
- 0,025 partie en poids d'inhibiteur (6) consistant dans l'éthylcyclohexanol [constituant dénommé ci-après inhibiteur (6)],
- 1 partie en poids du composé (4.1) du promoteur (4) consistant dans le vinyltriméthoxysilane [constituant dénommé ci-après VTMS (4.1)] ;
- et 1 partie en poids du composé (4.2) du promoteur (4) consistant dans 3-glycidoxypropyltriméthoxysilane [consistant dénommé ci-après GLYMO (4.2)].

1.2 - Préparation de la partie B du bicomposant :

Dans un réacteur, à température ambiante, on mélange :

- 44,6 parties en poids de résine (5) ;
- 36,3 parties en poids d'huile (1) de haute viscosité ;
- 14,5 parties en poids d'huile (1) de basse viscosité ;
- 0,6 partie en poids de base colorante à base de bleu de bromophtal référencé 4 GNP, commercialisé par la société CIBA GEIGY [constituant dénommé ci-après base colorante] ;
- 0,0215 partie en poids de platine métal, introduit sous la forme d'un complexe organométallique à 12 % en poids de platine métal, connu sous le nom de catalyseur de Karstedt [constituant dénommé ci-après platine du catalyseur

(3)] ;

- et 4 parties en poids du composé (4.3) du promoteur (4) consistant dans le titanate de butyle $Ti(OBu)_4$ [constituant dénommé ci-après $Ti(OBu)_4$ (4.3)].

1.3 - Préparation du bicomposant

Le bicomposant est obtenu par mélange, à température ambiante, de 100 parties en poids de la partie A et de 10 parties en poids de la partie B. On obtient ainsi la composition C1, dont les proportions des constituants sont indiquées dans le tableau I donné ci-après.

2.- Préparation d'une composition silicone chargée jouant le rôle de composition témoin (composition C2) :

2.1 - Préparation d'un empâtage primaire :

Dans un mélangeur planétaire, on introduit :

- 35 parties en poids de résine (5) ;
- 29 parties en poids de quartz broyé ayant une granulométrie moyenne de l'ordre de 2,5 µm et développant une surface BET de l'ordre de 3 $m^2/g$, commercialisé par la société SIFRACO [constituant dénommé ci-après charge n° 1];
- 23,2 parties en poids d'huile (1) de haute viscosité ;
- 11,8 parties en poids d'huile (1) de basse viscosité ;
- et 1 partie en poids de silice de pyrogénation traitée par de l'octaméthylcyclotétrasiloxane développant une surface BET de l'ordre de 250 $m^2/g$ [constituant dénommé ci-après charge n° 2].

2.2 - Préparation de la partie A du bicomposant:

Dans un réacteur, à température ambiante, on mélange :

- 94 parties en poids de l'empâtage ci-dessus ;
- 4 parties en poids d'huile (2) ;
- 0,025 partie en poids d'inhibiteur (6),
- 1 partie en poids de VTMS (4.1) ;
- et 1 partie en poids de GLYMO (4.2).

2.3 - Préparation de la partie B du bicomposant :

Dans un réacteur, à température ambiante, on mélange :

- 88,3 parties en poids de l'empâtage ci-dessus ;
- 7,6 parties en poids d'huile (1) de haute viscosité ;
- 0,1 partie en poids de base colorante ,
- 0,0215 partie en poids de platine du catalyseur (3) ;
- et 4 parties en poids de $Ti(OBu)_4$ (4.3) ;

2.4 - Préparation du bicomposant :

Le bicomposant est obtenu par mélange, à température ambiante, de 100 parties en poids de la partie A et de 10 parties en poids de la partie B. On obtient ainsi la composition témoin C2, dont les proportions des constituants sont indiquées dans le tableau I donné ci-après.

TABLEAU I

| Compositions (parties en poids | | |
|---|---|---|
| | C1 | C2 |
| Résine (5) | 47,68 | 32,71 |
| Huile (1) de haute viscosité | 30,56 | 22,37 |
| Huile (1) de basse viscosité | 14,96 | 11,02 |
| Huile (2) | 4,54 | 3,63 |
| Inhibiteur (6) | 0,023 | 0,023 |
| Base colorante | 0,055 | 0,009 |
| Platine du catalyseur (3) | 0,002 | 0,002 |
| VTMS (4.1) | 0,91 | 0,91 |
| GLYMO (4.2) | 0,91 | 0,91 |
| $Ti(OBu)_4$ (4.3) | 0,36 | 0,36 |
| Charges n° 1 et n° 2 | -- | 28,06 |
| Total | 100,00 | 100,00 |

**Exemple 2** :

Exemple d'application comme revêtement de tissu en polyamide

1.- Protocole d'application :

La composition est déposée à l'aide de racles sur des tissus à base de polyamide de type 6,6 (polyhexaméthylèneadipamide) ayant des titres en décitex (dtex) qui varient, puis, après enduction elle est réticulée, chaque fois, 4 minutes à 150°C dans un four commercialisé par la société MATTHIS.

2.- Résultats:

2.1- Enduction sur un tissu polyamide désencollé de 235 dtex ayant 28,5 x 28,5 fils/cm, et évaluation du gain obtenu concernant la réduction du poids de dépôt de la couche d'enduction, pour un même réglage de la racle d'enduction, quand on passe de la composition témoin à la composition selon l'invention :

Tableau II

| Composition | Poids déposé (g/$m^2$) | Gain du poids déposé (%) | Résistance au feu (mm/min) (1) | Test "scrub" (nombre de froissements) (2) |
|---|---|---|---|---|
| C2 | 31 | -- | 75 | 500 |
| C1 | 25 | 20 | 85 | 1000 |

(1) Les mesures sont réalisées selon les indications de la norme FMVSS 302 ("Flammability Motor Vehicule Safety Standard").

(2) Le test de résistance au froissement et à l'abrasion (test "scrub") (norme NF G 37110) reflète l'adhérence et la tenue au vieillissement de la composition. Ce test consiste à soumettre le tissu, d'une part, à un mouvement de cisaillement à l'aide de deux mâchoires pinçant les deux bords opposés d'une éprouvette et animées d'un mouvement alternatif l'une par rapport à l'autre et, d'autre part, à une abrasion par contact avec un support mobile.

2.2- Enduction sur un tissu polyamide désencollé de 470 dtex ayant 18 x 18 fils/cm, soit un tissu à contexture ouverte (porosité > 15 l/$dm^2$/min.), et évaluation de la résistance au feu et du test "scrub", quand on passe de la

composition témoin à la composition selon l'invention, pour un même poids de dépôt de la couche d'enduction :

Tableau III

| Composition | Poids déposé (g/m$^2$) | Résistance au feu (mm/min) (1) | Test "scrub" (nombre de froissements) (2) |
|---|---|---|---|
| C2 | 32 | 60 | 300 |
| C1 | 32 | 57 | 1000 |

(1) et (2) cf. ci-avant les indications données sous le tableau II

2.3- Enduction sur un tissu polyamide désencollé de 470 dtex ayant 18 x 18 fils/cm (contexture ouverte), et évaluation des propriétés mécaniques sur tissu enduit, quand on passe de la composition témoin à la composition selon l'invention :

Tableau IV

| Composition | Poids déposé (g/m$^2$) | Résistance à la déchirure(1)(Newton) |
|---|---|---|
| | | Résistance |
| C2 | 32 | 300 |
| C1 | 33 | 420 |

(1) Les mesures sont réalisées selon les indications de la norme ASTM D 1682.

2.4- La conductivité thermique des élastomères silicones massifs, préférés par réticulation à 150°C des compositions C1 et C2, a été mesurée à deux températures différentes selon les indications de la norme ASTM D 2326-70. Le rapport entre la résistance à la rupture [(R/R) en MPa] de l'élastomère réticulé et son allongement à la rupture [(A/R) en %] a été mesuré également [(R/R) et (A/R) sont évalués selon les indications de la norme DIN 535041 :

Tableau V

| Composition | Conductivité thermique (W/m.K) | | Densité | Rapport (R/R) / (A/R) |
|---|---|---|---|---|
| | à 23°C | à 170°C | | |
| C2 | 0,23 | 0,21 | 1,2 | 0,03 |
| C1 | 0,17 | 0,14 | 1,05 | 0,015 |

Lorsque les tissus enduits avec la même épaisseur des compositions C1 et C2 sont soumis à une température importante, la protection obtenue avec la composition C1 selon l'invention est supérieure.

2.5- Enduction sur un tissu de polyamide désencollé de 470 dtex ayant 16 x 16 fils/cm (contexture ouverte) à l'aide de la composition C1 et d'une composition C3 définie ci-après.

2.5.1 - Composition C3 :

Partie A du bicomposant :

Identique partie A de C1, sauf pour les composants (5) et (1) qui deviennent :

- 48 parties en poids de résine (5) de structure $MM^{Vi}DD^{Vi}Q$ contenant 0,8 % en poids de groupes vinyles (Vi) et constituée de 27 % en poids de motifs $(CH_3)_3SiO_{0,5}$, 0,15 % en poids de motifs $(CH_3)_2ViSiO_{0,5}$, 60 % en poids de motifs $(CH_3)_2SiO$, 2,4 % en poids de motifs $(CH_3)ViSiO$ et 9,6 % en poids de motifs $SiO_2$ ;
- 45 parties en poids d'un organopolysiloxane (1) consistant dans une huile polydiméthylsiloxane bloquée à chacune des extrémités des chaînes par un motif $(CH_3)_2ViSiO_{0,5}$, ayant une viscosité de 100.000 mPa.s, et contenant 0,003 fonction Si-Vi pour 100 g d'huile.

Partie B du composant :

Identique partie B de C1, sauf pour les composants (5) et (1) qui deviennent :

- 45 parties en poids de résine (5) telle que décrite en A ;
- 51 parties en poids d'huile (1) telle que décrite en A.

Préparation du bicomposant :

Identique à C1.

2.5.2- Caractérisques du tissu et de l'enduction :

- poids tissu non enduit : 160 g/$m^2$ ;
- poids de silicone déposé : 30 g/$m^2$.

2.5.3-Résultats :

Propriétés de l'élastomère réticulé :

- conductivité à 23°C (norme ASTM D 2326-70) : 0,17 W/m.K pour C1 et C3 ;
- allongement à la rupture (DIN 53504) :

  190 % pour C1 ;
  250 % pour C3 ;

- résistance à la déchirure (ASTM D624) :

  3 k.N/m pour C1 ;
  9 k.N/m pour C3 ;

Propriétés du tissu enduit :

- résistance à la déchirure (DIN ASTM D 1682) :

  tissu seul : 100 N ;
  tissu enduit : 450 N pour C1 et C3.

- résistance au froissement à 30 g/$m^2$ (NF G 37110) :

  800 - 1000 pour C1 ;
  1500 - 1700 pour C3.

2.6- Enduction sur un tissu de polyamide désencollé de 470 dtex et à 21 x 20 fils/cm enduction 25 g/$m^2$, à l'aide de la composition C1 et de la composition C3 :

- résistance à la déchirure (ASTM D 1682) :

  tissu seul : 210 N ;
  tissu enduit par C1 : 550 N ;
  tissu enduit par C3 : 520 N.

- pliabilité (ASTM D 4032-94) :

  tissu enduit par C1 : 15 ;
  tissu enduit par C3 : 9.

Ce test de pliabilité reflète la souplesse du tissu et sa capacité à être plié dans un faible volume (plus la valeur est faible, plus la pliabilité est bonne).

## Revendications

1. Composition d'enduction du type de celles vulcanisables à froid (EVF), **caractérisée en ce qu'**elle est dépourvue de toute charge minérale de renfort et qu'elle consiste dans le mélange formé de :

    (1) au moins un polyorganosiloxane présentant, par molécule, au moins deux groupes alcényles, en $C_2$-$C_6$ liés au silicium,
    (2) au moins un polyorganosiloxane présentant, par molécule, au moins deux atomes d'hydrogène liés au silicium,
    (3) une quantité catalytiquement efficace d'au moins un catalyseur, composé d'au moins un métal appartenant au groupe du platine,
    (4) un promoteur d'adhérence comportant exclusivement :

        (4.1) au moins un organosilane alcoxylé contenant, par molécule, au moins un groupe alcényle en $C_2$ - $C_6$,
        (4.2) au moins un composé organosilicié comprenant au moins un radical époxy,
        (4.3) au moins un chélate de métal M et/ou un alcoxyde métallique de formule générale : M(OJ)n, avec n = valence de M et J = alkyle linéaire ou ramifié en $C_1$ - $C_8$,
        M étant choisi dans le groupe formé par : Ti, Zr, Ge, Li, Mn, Fe, Al et Mg,

    (5) au moins une résine polyorganosiloxane,
    (6) et éventuellement au moins un inhibiteur de réticulation.

2. Composition selon la revendication 1, **caractérisée en ce que** l'organosit ane alcoxylé (4.1) du promoteur (4) répond à la formule générale suivante:

(4.1) 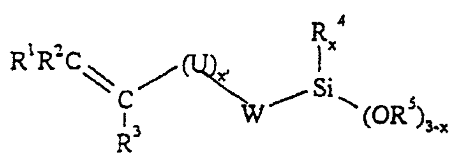

dans laquelle :

- $R^1$, $R^2$, $R^3$ sont des radicaux hydrogénés ou hydrocarbonés identiques ou différents entre eux et représentent l'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$ - $C_4$,
- W est un lien valentiel,
- $R^4$ et $R^5$ sont des radicaux identiques ou différents et représentent un alkyle en C1 - C4 linéaire ou ramifié,
- x' = 0 ou 1,
- x = 0 à 2.

3. Composition selon la revendication 1 ou 2, **caractérisée en ce que** le composé organosilicié (4.2) du promoteur (4) est choisi :

- soit parmi les produits (4.2a) répondant à la formule générale suivante :

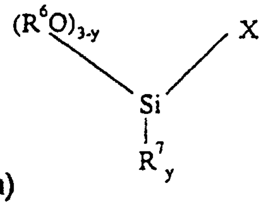

(4.2a)

dans laquelle :

- $R^6$ est un radical alkyle linéaire ou ramifié en $C_1$ - $C_4$,
- $R^7$ est un radical alkyle linéaire ou ramifié,
- y est égal à 0, 1, 2 ou 3,
- 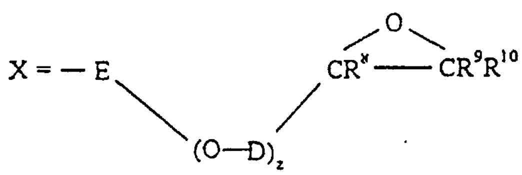

avec

Δ E et D qui sont des radicaux identiques ou différents choisis parmi les alkyles en $C_1$-$C_4$ linéaires ou ramifiés,
Δ z qui est égal à 0 ou 1,
Δ $R^8$, $R^9$, $R^{10}$ qui sont des radicaux identiques ou différents représentant l'hydrogène ou un alkyle linéaire ou ramifié en $C_1$-$C_4$,
Δ $R^8$ et $R^9$ ou $R^{10}$ pouvant alternativement constituer ensemble et avec les deux carbones porteurs de l'époxy, un cycle alkyle ayant de 5 à 7 chaînons,

- soit parmi les produits (4.2b) constitués par des polydiorganosiloxanes époxyfonctionnels comportant :

(i) au moins un motif siloxyle de formule :

$$X_p\, G_q\, SiO_{\frac{4-(p+q)}{2}} \qquad (IV.2\ b_1)$$

dans laquelle :

- X est le radical tel que défini ci-dessus pour la formule (IV.2 a)
- G est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- p = 1 ou 2,
- q = 0, 1 ou 2,
- p + q = 1, 2 ou 3.

et (2i) éventuellement au moins un motif siloxyle de formule :

$$G_r\, SiO_{\frac{4-r}{2}} \qquad (IV.2\ b_2)$$

dans laquelle G a la même signification que ci-dessus et r a une valeur comprise entre 0 et 3.

**4.** Composition selon l'une quelconque des revendications 1 à 3, **caractérisée en ce que** le métal M du chélate et/ou de l'alcoxyde (4.3) est choisi dans la liste suivante : Ti, Zr, Ge, Li, Mn.

**5.** Composition selon l'une quelconque des revendications 1 à 4, **caractérisée en ce que** les proportions pondérales entre (4.1), (4.2) et (4.3), exprimées en pourcentages en poids par rapport au total des trois, sont les suivantes :

(4.1) est compris entre 15 et 70,
(4.2) est compris entre 70 et 15,
(4.3) est compris entre 5 et 25 ;

et **en ce que** le ratio pondéral (4.2) : (4.1) est compris entre 2 : 1 et 0,5 : 1.

**6.** Composition selon l'une quelconque des revendications 1 à 5, **caractérisée en ce que** le promoteur d'adhérence est présent à raison de 0,1 à 10 % en poids par rapport à l'ensemble des constituants.

**7.** Composition selon l'une quelconque des revendications 1 à 6, **caractérisée en ce que** la résine polyorganosiloxane (5) comporte dans sa structure de 0,1 à 20 % en poids de groupe(s) alcényle(s), ladite structure présentant au moins deux motifs différents choisis parmi les motifs de types M, D, T et Q, l'un au moins de ces motifs étant un motif de type T ou Q.

**8.** Composition selon l'une quelconque des revendications 1 à 7, **caractérisée en ce que** la résine (5) est présente à raison de 10 à 70 % en poids par rapport à l'ensemble des constituants.

**9.** Composition selon l'une quelconque des revendications 1 à 8, **caractérisée en ce que** le polyorganosiloxane (1) présente :

(i) des motifs siloxyles de formule :

$$T_a\ Z_b\ SiO_{\frac{4-(a+b)}{2}} \qquad (1.1)$$

dans laquelle :

- T est un groupe alcényle, de préférence vinyle ou allyle,
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,
  et (2i) éventuellement des autres motifs siloxyles de formule :

$$Z_C\ SiO_{\frac{4-c}{2}} \qquad (1.2)$$

dans laquelle Z a la même signification que ci-dessus et c a une valeur comprise entre 0 et 3.

**10.** Composition selon l'une quelconque des revendications 1 à 9, **caractérisée en ce que** le polyorganosiloxane (2) comporte

(i) des motifs siloxyles de formule :

$$H_d\ L_e\ SiO_{\frac{4-g}{2}} \qquad (2.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- d est 1 ou 2, e est 0,1 ou 2, d + e a une valeur comprise entre 1 et 3,

et (2i) éventuellement des autres motifs siloxyles de formule moyenne :

$$L_g\ SiO_{\frac{4-g}{2}} \qquad (2.2)$$

dans laquelle L a la même signification que ci-dessus et g a une valeur comprise entre 0 et 3.

**11.** Composition selon l'une quelconque des revendications 1 à 10, **caractérisée en ce que** les proportions de (1), (2) et (5) sont telles que le rapport du nombre des atomes d'hydrogène liés au silicium dans le polyorganosiloxane (2) sur le nombre de radicaux alcényles apportés par le polyorganosiloxane (1) et la résine (5) est compris entre 0,4 et 10.

**12.** Composition selon l'une quelconque des revendications 1 à 11, **caractérisée en ce que** l'huile (1) a une viscosité au moins égale à 1.000 mPa.s à 25°C.

**13.** Composition selon l'une quelconque des revendications 1 à 12, **caractérisée en ce que** l'huile (1) a une viscosité comprise entre 5.000 et 200.000 mPa.s.

**14.** Composition selon l'une quelconque des revendications 1 à 13, **caractérisée en ce que** la résine polyorganosiloxane (5) comprend des motifs Q.

**15.** Composition selon la revendication 14, **caractérisée en ce qu'**elle comprend au moins 2 % en poids de motifs Q.

**16.** Composition selon l'une quelconque des revendications 1 à 15, **caractérisée en ce qu'**elle comporte en outre un ou plusieurs additif(s) classique(s).

**17.** Système bicomposant précurseur de la composition selon l'une quelconque des revendications 1 à 16, **caractérisé :**

- **en ce qu'**il se présente en deux parties A et B distinctes destinées à être mélangées pour former la composition,
- et **en ce que** l'une de ces parties A et B comprend le catalyseur (3) et une seule espèce (1) ou (2) de polyorganosiloxane,
- **en ce que** la partie A ou B contenant le polyorganosiloxane (2) est exempte de composé (4.3) du promoteur (4) et la partie A ou B incluant le composé (4.1) du promoteur (4) ne comprend pas le catalyseur (3),
- et **en ce que** la résine (5) peut être mise en oeuvre dans la partie A ou la partie B ou dans les deux parties A et B, le catalyseur (3) ne devant pas être présent dans la partie A ou B contenant le polyorganosiloxane (2) et la résine (5).

**18.** Support fibreux tissé, tricoté, ou non tissé, enduit sur une ou deux faces par une composition selon l'une quelconque des revendications 1 à 16 ou par un système bi-composant selon la revendication 17.

**19.** Support enduit selon la revendication 18, **caractérisé en ce que** le support fibreux est un tissu à contexture ouverte ayant une porosité > 15 $l/dm^2/min$ suivant la norme DIN 53 887.

**20.** Support enduit selon la revendication 18, **caractérisé en ce que** la composition comprend une huile (1) de viscosité comprise entre 10.000 et 200.000 mPa.s à 25°C, et une résine (5) comportant des motifs Q, en proportions au moins égales à 2 % en poids.

**21.** Support enduit selon la revendication 19 ou 20, **caractérisé en ce que** le poids d'élastomère est inférieur ou égal à 30 $g/m^2$.

**22.** Support enduit selon la revendication 21, **caractérisé en ce qu'**il présente un poids inférieur ou égal à 200 $g/m^2$.

**23.** Support enduit selon la revendication 21, **caractérisé en ce qu'**il présente une résistance à la déchirure supérieure ou égale à 400 N.

**24.** Support fibreux tissé, tricoté ou non tissé enduit sur une ou deux faces d'un élastomère, susceptible d'être obtenu

par réticulation d'une composition selon l'une quelconque des revendications 1 à 16, ou d'un système bicomposant selon la revendication 17, **caractérisé en ce que** l'élastomère présente une densité < 1,1, une conductivité thermique à 23°C ≤ 0,18 W/m.K et dont le rapport entre la résistance à la rupture et l'allongement à la rupture est < 0,02, et **en ce que** le support est un support à contexture ouverte ayant une porosité > 15 l/dm$^2$/min selon la norme DIN 53 887.

**25.** Support enduit selon la revendication 24, **caractérisé en ce qu'**il comporte un enduit d'élastomère d'épaisseur inférieure ou égale à 30 g/m$^2$.

**26.** Support enduit selon la revendication 25, ayant un poids inférieur ou égal à 200 g/m$^2$.

**27.** Support enduit selon l'une des revendications 24 à 26, **caractérisé en ce qu'**il présente une résistance à la déchirure supérieure ou égale à 400 N.

**28.** Sac gonflable pour la protection d'un occupant de véhicule, formé à partir d'un tissu enduit selon l'une des revendications 18 à 27.

**29.** Utilisation de la composition selon l'une quelconque des revendications 1 à 16 ou du système précurseur selon la revendication 17, pour l'enduction de supports fibreux tissés, tricotés ou non tissés.

**30.** Utilisation selon la revendication 29, pour l'enduction de supports destinés à former des sacs gonflables pour la protection d'occupants de véhicules.

**31.** Utilisation selon la revendication 29 ou 30, pour l'enduction d'un tissu à contexture ouverte ayant une porosité > 15 l/dm$^2$/min suivant la norme DIN 53 887.

**32.** Utilisation d'une composition silicone, notamment une composition du type vulcanisable à froid (EVF) selon l'une quelconque des revendications 1 à 16, réticulant en un élastomère présentant une densité < 1,1, une conductivité thermique à 23°C ≤ 0,18 W/m.K et dont le rapport entre la résistance à la rupture et l'allongement à la rupture est < 0,02, pour l'enduction d'un substrat fibreux tissé, tricoté, ou non tissé, notamment en vue de la réalisation de sacs gonflables pour la protection d'occupants de véhicules.

**33.** Utilisation selon la revendication 32, pour l'enduction d'un substrat à contexture ouverte ayant une porosité > 15 l/dm$^2$/min selon la norme DIN 53 887.

## Patentansprüche

**1.** Beschichtungszusammensetzung des kalt vulkanisierbaren Typs (EVF), **dadurch gekennzeichnet, dass** sie frei von jeglichem mineralischen Füllstoff zur Verstärkung ist und dass sie aus dem Gemisch besteht, das gebildet wird von:

(1) wenigstens einem Polyorganosiloxan, das pro Molekül wenigstens zwei an das Silicium gebundene $C_2$-$C_6$-Alkenylgruppen aufweist,
(2) wenigstens einem Polyorganosiloxan, das pro Molekül wenigstens zwei an das Silicium gebundene Wasserstoffatome aufweist,
(3) einer katalytisch wirksamen Menge wenigstens eines Katalysators, der aus wenigstens einem Metall besteht, das der Gruppe des Platins angehört,
(4) einem Haftungspromotor, der ausschließlich umfasst:

(4.1) wenigstens ein Alkoxyorganosilan, das pro Molekül wenigstens eine $C_2$-$C_6$-Alkenylgruppe enthält,
(4.2) wenigstens eine Organosiliciumverbindung, die wenigstens einen Epoxyrest umfasst,
(4.3) wenigstens ein Chelat eines Metalls M und/oder ein Metallalkoxid der allgemeinen Formel: $M(OJ)_n$ mit n = Wertigkeit von M und J = linearer oder verzweigter $C_1$-$C_8$-Alkylrest,

wobei M aus der Gruppe ausgewählt ist, die gebildet wird von: Ti, Zr, Ge, Li, Mn, Fe, Al und Mg,
(5) wenigstens einem Polyorganosiloxanharz,
(6) und gegebenenfalls wenigstens einem Vernetzungsinhibitor.

**2.** Zusammensetzung gemäß Anspruch 1, **dadurch gekennzeichnet, dass** das Alkoxyorganosilane (4.1) des Promotors (4) der folgenden allgemeinen Formel entspricht:

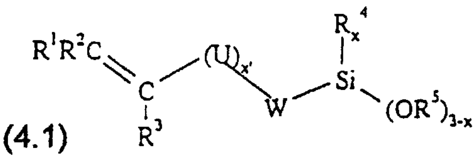

(4.1)

worin:

- $R^1$, $R^2$, $R^3$ untereinander gleiche oder verschiedene Wasserstoff- oder Kohlenwasserstoffreste sind und Wasserstoff, einen linearen oder verzweigten $C_1$-$C_4$-Alkylrest oder einen gegebenenfalls mit wenigstens einem $C_1$-$C_3$-Alkylrest substituierten Phenylrest darstellen,
- U ein linearer oder verzweigter $C_1$-$C_4$-Alkylenrest ist,
- W eine Valenzbindung ist,
- $R^4$ und $R^5$ gleiche oder verschiedene Reste sind und einen linearen oder verzweigten $C_1$-$C_4$-Alkylrest darstellen,
- x' = 0 oder 1,
- x = 0 bis 2.

**3.** Zusammensetzung gemäß Anspruch 1 oder 2, **dadurch gekennzeichnet, dass** die Organosiliciumverbindung (4.2) des Promotors (4) ausgewählt ist:

- entweder unter den Produkten (4.2a), die der folgenden allgemeinen Formel entsprechen:

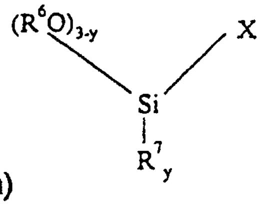

(4.2a)

worin:

- $R^6$ ein linearer oder verzweigter $C_1$-$C_4$-Alkylrest ist,
- $R^7$ ein linearer oder verzweigter Alkylrest ist,
- y gleich 0, 1, 2 oder 3 ist
- 

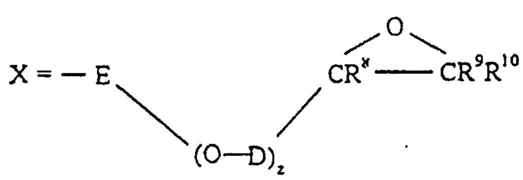

mit

Δ E und D, die gleiche oder verschiedene, unter den linearen oder verzweigten $C_1$-$C_4$-Alkylresten ausgewählte Reste sind,

Δ z, das gleich 0 oder 1 ist,

Δ $R^8$, $R^9$, $R^{10}$, die gleiche oder verschiedene Reste sind, die Wasserstoff oder einen linearen oder verzweigten $C_1$-$C_4$-Alkylrest darstellen,

Δ wobei $R^8$ und $R^9$ oder $R^{10}$ alternativ zusammen und mit den beiden Kohlenstoffatomen, die die Epoxygruppe

tragen, einen Alkylring mit 5 bis 7 Ringgliedern bilden können,

- oder unter den Produkten (4.2b), die von epoxyfunktionellen Polydiorganosiloxanen mit gebildet werden, die umfassen:

(i) wenigstens eine Siloxyeinheit der Formel:

$$X_pG_qSiO_{\frac{4-(p+q)}{2}} \qquad (IV.2\ b_1)$$

worin

- X der wie oben für die Formel (IV.2a) definierte Rest ist,
- G eine einwertige Kohlenwasserstoffgruppe ohne ungünstige Wirkung auf die Aktivität des Katalysators ist und ausgewählt ist unter den Alkylgruppen mit einschließlich 1 bis 8 Kohlenstoffatomen, gegebenenfalls substituiert mit wenigstens einem Halogenatom, sowie unter den Arylgruppen,
- p = 1 oder 2,
- q = 0, 1 oder 2,
- p + q = 1, 2 oder 3,

und (2i) gegebenenfalls wenigstens eine Siloxyeinheit der Formel:

$$G_rSiO_{\frac{4-r}{2}} \qquad (IV.2\ b_2)$$

worin G dieselbe Bedeutung wie oben hat und r einen Wert zwischen 0 und 3 hat.

**4.** Zusammensetzung gemäß einem der Ansprüche 1 bis 3, **dadurch gekennzeichnet, dass** das Metall M des Chelats und/oder des Alkoxids (4.3) aus der folgenden Liste ausgewählt ist: Ti, Zr, Ge, Li, Mn.

**5.** Zusammensetzung gemäß einem der Ansprüche 1 bis 4, **dadurch gekennzeichnet, dass** die Gewichtsanteile von (4.1), (4.2) und (4.3), ausgedrückt als Gewichtsprozentgehalte, bezogen auf die Summe der drei, die Folgenden sind:

(4.1) liegt zwischen 15 und 70,
(4.2) liegt zwischen 70 und 15,
(4.3) liegt zwischen 5 und 25;

und dadurch, dass das Gewichtsverhältnis (4.2) : (4.1) zwischen 2 : 1 und 0,5 : 1 liegt.

**6.** Zusammensetzung gemäß einem der Ansprüche 1 bis 5, **dadurch gekennzeichnet, dass** der Haftungspromotor in einer Menge von 0,1 bis 10 Gew.-%, bezogen auf die Gesamtheit der Bestandteile, vorliegt.

**7.** Zusammensetzung gemäß einem der Ansprüche 1 bis 6, **dadurch gekennzeichnet, dass** das Polyorganosiloxanharz (5) in seiner Struktur 0,1 bis 20 Gew.-% einer Alkenylgruppe(n) umfasst, wobei besagte Struktur wenigstens zwei verschiedene Einheiten aufweist, die unter den Einheiten der Typen M, D, T und Q ausgewählt sind, wobei wenigstens eine dieser Einheiten eine Einheit vom Typ T oder Q ist.

**8.** Zusammensetzung gemäß einem der Ansprüche 1 bis 7, **dadurch gekennzeichnet, dass** das Harz (5) in einer Menge von 10 bis 70 Gew.-%, bezogen auf die Gesamtheit der Bestandteile, vorliegt.

**9.** Zusammensetzung gemäß einem der Ansprüche 1 bis 8, **dadurch gekennzeichnet, dass** das Polyorganosiloxan (1) aufweist:

(i) Siloxyeinheiten der Formel:

$$T_aZ_bSiO^{\frac{4-(a+b)}{2}} \qquad (1.1)$$

worin:

- T eine Alkenyl-, vorzugsweise Vinyl- oder Allylgruppe ist,
- Z eine einwertige Kohlenwasserstoffgruppe ohne ungünstige Wirkung auf die Aktivität des Katalysators ist und ausgewählt ist unter den Alkylgruppen mit einschließlich 1 bis 8 Kohlenstoffatomen, gegebenenfalls substituiert mit wenigstens einem Halogenatom, sowie unter den Arylgruppen,
- a 1 oder 2 ist, b 0, 1 oder 2 ist und a + b zwischen 1 und 3 liegt,
  und (2i) gegebenenfalls weitere Siloxyeinheiten der Formel:

$$Z_cSiO^{\frac{4-c}{2}} \qquad (1.2)$$

worin Z dieselbe Bedeutung wie oben hat und c einen Wert zwischen 0 und 3 hat.

**10.** Zusammensetzung gemäß einem der Ansprüche 1 bis 9, **dadurch gekennzeichnet, dass** das Polyorganosiloxan (2) umfasst:

(i) Siloxyeinheiten der Formel:

$$H_dL_eSiO_{\frac{4-(d+e)}{2}} \qquad (2.1)$$

worin:

- L eine einwertige Kohlenwasserstoffgruppe ohne ungünstige Wirkung auf die Aktivität des Katalysators ist und ausgewählt ist unter den Alkylgruppen mit einschließlich 1 bis 8 Kohlenstoffatomen, gegebenenfalls substituiert mit wenigstens einem Halogenatom, sowie unter den Arylgruppen,
- d 1 oder 2 ist, e 0, 1 oder 2 ist, d + e einen Wert zwischen 1 und 3 hat,
  und (2i) gegebenenfalls weitere Siloxyeinheiten der mittleren Formel:

$$L_gSiO_{\frac{4-g}{2}} \qquad (2.2)$$

worin L dieselbe Bedeutung wie oben hat und g einen Wert zwischen 0 und 3 hat.

**11.** Zusammensetzung gemäß einem der Ansprüche 1 bis 10, **dadurch gekennzeichnet, dass** die Anteile von (1), (2) und (5) derart sind, dass das Verhältnis der Anzahl der an das Silicium gebundenen Wasserstoffatome in dem Polyorganosiloxan (2) zur Anzahl an Alkenylresten, die von dem Polyorganosiloxan (1) und dem Harz (5) eingebracht werden, zwischen 0,4 und 10 liegt.

**12.** Zusammensetzung gemäß einem der Ansprüche 1 bis 11, **dadurch gekennzeichnet, dass** das Öl (1) eine Viskosität von wenigstens gleich 1.000 mPa·s bei 25°C hat.

**13.** Zusammensetzung gemäß einem der Ansprüche 1 bis 12, **dadurch gekennzeichnet, dass** das Öl (1) eine Viskosität zwischen 5.000 und 200.000 mPa·s hat.

**14.** Zusammensetzung gemäß einem der Ansprüche 1 bis 13, **dadurch gekennzeichnet, dass** das Polyorganosiloxanharz (5) Q-Einheiten umfasst.

**15.** Zusammensetzung gemäß Anspruch 14, **dadurch gekennzeichnet, dass** es wenigstens 2 Gew.-% an Q-Einheiten umfasst.

**16.** Zusammensetzung gemäß einem der Ansprüche 1 bis 15, **dadurch gekennzeichnet, dass** sie außerdem einen oder mehrere herkömmliche Zusätze umfasst.

**17.** Zweikomponentiges Vorstufensystem der Zusammensetzung gemäß einem der Ansprüche 1 bis 16, **gekenn-**

**zeichnet:**

- **dadurch, dass** es in zwei unterschiedlichen Teilen A und B vorliegt, die dazu bestimmt sind, gemischt zu werden, um die Zusammensetzung zu bilden,
- und dadurch, dass einer dieser Teile A und B den Katalysator (3) und eine einzige Polyorganosiloxanspezies (1) oder (2) umfasst,
- dadurch, dass der Teil A oder B, der das Polyorganosiloxan (2) enthält, frei von Verbindung (4.3) des Promotors (4) ist und der Teil A oder B, der die Verbindung (4.1) der Promotors (4) enthält, nicht den Katalysator (3) umfasst,
- und dadurch, dass das Harz (5) im Teil A oder im Teil B oder in beiden Teilen A und B eingesetzt werden kann, wobei der Katalysator (3) nicht in dem Teil A oder B vorliegen darf, der das Polyorganosiloxan (2) und das Harz (5) enthält.

**18.** Gewebter, gewirkter oder nicht gewebter faseriger Träger, beschichtet auf einer oder beiden Seiten mit einer Zusammensetzung gemäß einem der Ansprüche 1 bis 16 oder mit einem Zweikomponentensystem gemäß Anspruch 17.

**19.** Beschichteter Träger gemäß Anspruch 18, **dadurch gekennzeichnet, dass** der faserige Träger ein Gewebe mit offenem Gewebebild ist, das eine Porosität > 15 $l/dm^2/min$ gemäß der Norm DIN 53 887 hat.

**20.** Beschichteter Träger gemäß Anspruch 18, **dadurch gekennzeichnet, dass** die Zusammensetzung umfasst ein Öl (1) mit einer Viskosität zwischen 10.000 und 200.000 mPa·s bei 25°C und ein Harz (5) mit Q-Einheiten in Anteilen von wenigstens 2 Gew.-%.

**21.** Beschichteter Träger gemäß Anspruch 19 oder 20, **dadurch gekennzeichnet, dass** das Gewicht an Elastomer kleiner oder gleich 30 $g/m^2$ ist.

**22.** Beschichteter Träger gemäß Anspruch 21, **dadurch gekennzeichnet, dass** er ein Gewicht kleiner oder gleich 200 $g/m^2$ aufweist.

**23.** Beschichteter Träger gemäß Anspruch 21, **dadurch gekennzeichnet, dass** er eine Beständigkeit gegen das Zerreißen von höher oder gleich 400 N aufweist.

**24.** Gewebter, gewirkter oder nicht gewebter faseriger Träger, beschichtet auf einer oder beiden Seiten mit einem Elastomer, das durch Vernetzung einer Zusammensetzung gemäß einem der Ansprüche 1 bis 16 oder eines Zweikomponentensystems gemäß Anspruch 17 erhalten werden kann, **dadurch gekennzeichnet, dass** das Elastomer eine Dichte < 1,1, eine thermische Leitfähigkeit bei 23°C ≤ 0,18 W/m·K aufweist, und dessen Verhältnis zwischen der Reißfestigkeit und der Dehnung beim Reißen < 0,02 ist, und dadurch, dass der Träger ein Träger mit offenem Gewebebild ist mit einer Porosität > 15 $l/dm^2/min$ gemäß der Norm DIN 53 887.

**25.** Beschichteter Träger gemäß Anspruch 24, **dadurch gekennzeichnet, dass** er eine Elastomerbeschichtung mit einer Dicke kleiner oder gleich 30 $g/m^2$ umfasst.

**26.** Beschichteter Träger gemäß Anspruch 25 mit einem Gewicht kleiner oder gleich 200 $g/m^2$.

**27.** Beschichteter Träger gemäß einem der Ansprüche 24 bis 26, **dadurch gekennzeichnet, dass** er eine Beständigkeit gegen das Zerreißen von höher oder gleich 400 N aufweist.

**28.** Aufblasbarer Sack zum Schutz eines Fahrzeuginsassen, gebildet aus einem beschichteten Gewebe gemäß einem der Ansprüche 18 bis 27.

**29.** Verwendung der Zusammensetzung gemäß einem der Ansprüche 1 bis 16 oder des Vorstufensystems gemäß Anspruch 17 für das Beschichten von gewebten, gewirkten oder nicht gewebten faserigen Trägern.

**30.** Verwendung gemäß Anspruch 29 für das Beschichten von Trägern, die dazu bestimmt sind, aufblasbare Säcke für den Schutz von Fahrzeuginsassen zu bilden.

**31.** Verwendung gemäß Anspruch 29 oder 30 für das Beschichten eines Gewebes mit offenem Gewebebild mit einer

Porosität > 15 l/dm$^2$min gemäß der Norm DIN 53 887.

**32.** Verwendung einer Siliconzusammensetzung, insbesondere einer Zusammensetzung des kalt vulkanisierbaren Typs (EVF), gemäß einem der Ansprüche 1 bis 16, die zu einem Elastomer vernetzt, das eine Dichte < 1,1, eine thermische Leitfähigkeit bei 23°C ≤ 0,18 W/m·K aufweist und dessen Verhältnis zwischen der Reißfestigkeit und der Dehnung beim Reißen < 0,02 ist, für das Beschichten eines gewebten, gewirkten oder nicht gewebten faserigen Trägers, insbesondere im Hinblick auf die Herstellung von aufblasbaren Säcken für den Schutz von Fahrzeuginsassen.

**33.** Verwendung gemäß Anspruch 32 für das Beschichten eines Substrats mit offenem Gewebebild mit einer Porosität > 15 l/dm$^2$/min gemäß der Norm DIN 53 887.

## Claims

**1.** Coating composition of the type of those which are cold-curing (RTV), **characterized in that** it is devoid of any reinforcing mineral filler and that it consists of the mixture formed by:

(1) at least one polyorganosiloxane having, per molecule, at least two $C_2$-$C_6$ alkenyl groups linked to the silicon,
(2) at least one polyorganosiloxane having, per molecule, at least two hydrogen atoms linked to the silicon,
(3) a catalytically effective amount of at least one catalyst, composed of at least one metal belonging to the platinum group,
(4) an adhesion promoter comprising exclusively:

(4.1) at least one alkoxylated organosilane containing, per molecule, at least one $C_2$-$C_6$ alkenyl group,
(4.2) at least one organosilicon compound which includes at least one epoxy radical,
(4.3) at least one metal M chelate and/or one metal alkoxide of general formula: $M(OJ)_n$, with n = the valency of M and J = a linear or branched $C_1$-$C_8$ alkyl,
M being selected from the group formed by: Ti, Zr, Ge, Li, Mn, Fe, Al and Mg,

(5) at least one polyorganosiloxane resin, and
(6) optionally, at least one crosslinking inhibitor.

**2.** Composition according to claim 1, **characterized in that** the alkoxylated organosilane (4.1) of the promoter (4) satisfies the following general formula:

(4.1) 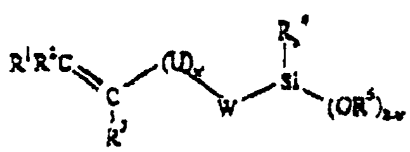

in which:

- $R^1$, $R^2$, $R^3$ are hydrogen-containing or hydrocarbon radicals, which are the same or different from each other and represent hydrogen, a linear or branched $C_1$-$C_4$ alkyl or a phenyl optionally substituted with at least one $C_1$-$C_3$ alkyl,
- U is a linear or branched $C_1$-$C_4$ alkylene,
- W is a valency bond,
- $R^4$ and $R^5$ are radicals, which are the same or different and represent a linear or branched $C_1$-$C_4$ alkyl,
- x' = 0 or 1, and
- x = 0 to 2.

**3.** Composition according to claim 1 or 2, **characterized in that** the organosilicon compound (4.2) of the promoter (4) is selected:

- either from the substances (4.2a) satisfying the following general formula:

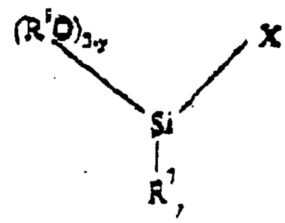

(4.2a)

in which:

- $R^6$ is a linear or branched $C_1$-$C_4$ alkyl radical,
- $R^7$ is a linear or branched alkyl radical,
- y is equal to 0, 1, 2 or 3,

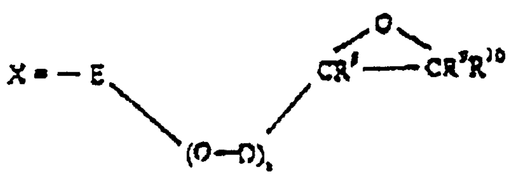

with

- E and D, which are the same or different radicals, selected from linear or branched $C_1$-$C_4$ alkyls,
- z, which is equal to 0 or 1,
- $R^8$, $R^9$, $R^{10}$, which are the same or different radicals, representing hydrogen or a linear or branched $C_1$-$C_4$ alkyl,
- $R^8$ and $R^9$ or $R^{10}$ which may alternately constitute together, and with the two carbons containing the epoxy, a 5-membered to 7-membered alkyl ring,

- or from the substances (4.2b) consisting of epoxy-functional polydiorganosiloxanes comprising:

  (i) at least one siloxyl functional unit of formula:

$$X_p\, G_q\, SiO_{\frac{4-(p+q)}{2}} \qquad (IV.2\ b_1)$$

in which:

- X is the radical as defined above in the case of formula (IV.2a)
- G is a monovalent hydrocarbon group, free of any action unfavourable to the activity of the catalyst and selected from the alkyl groups having from 1 to 8 carbon atoms inclusive, optionally substituted by at least one halogen atom, and as well as from the aryl groups,
- p = 1 or 2,
- q = 0, 1 or 2,
- p+q = 1, 2 or 3,

  and (2i) optionally at least one siloxyl functional unit of formula:

$$G_r\, SiO_{\frac{4-r}{2}} \qquad (IV.2\ b_2)$$

in which G has the same meaning as above and r has a value of between 0 and 3.

4. Composition according to any one of claims 1 to 3, **characterized in that** the metal M of the chelate and/or of the alkoxide (4.3) is selected from the following list: Ti, Zr, Ge, Li, Mn.

5. Composition according to any one of claims 1 to 4, **characterized in that** the weight proportions between (4.1), (4.2) and (4.3), expressed in percentages by weight with respect to the total of the three, are as follows:

(4.1) is between 15 and 70,
(4.2) is between 70 and 15,
(4.3) is between 5 and 25;

and **in that** the weight ratio (4.2): (4.1) is between 2:1 and 0.5:1.

6. Composition according to any one of claims 1 to 5, **characterized in that** the adhesion promoter is present in an amount of from 0.1 to 10% by weight with respect to all of the constituents.

7. Composition according to any one of claims 1 to 6, **characterized in that** the polyorganosiloxane resin (5) contains, in its structure, from 0.1 to 20% by weight of an alkenyl group or groups, the said structure having at least two different functional units selected from the functional units of the M, D, T and Q types, at least one of these functional units being a functional unit of the T or Q type.

8. Composition according to any one of claims 1 to 7, **characterized in that** the resin (5) is present in an amount of from 10 to 70% by weight with respect to all of the constituents.

9. Composition according to any one of claims 1 to 8, **characterized in that** the polyorganosiloxane (1) has:

(i) siloxyl functional units of formula:

$$T_aZ_bSiO^{\frac{4-(a+b)}{2}} \quad (1.1)$$

in which:

- T is an alkenyl group, preferably vinyl or allyl,
- Z is a monovalent hydrocarbon group, free of any action unfavourable to the activity of the catalyst and selected from alkyl groups having from 1 to 8 carbon atoms inclusive, optionally substituted by at least one halogen atom, and as well as from aryl groups,
- a is 1 or 2, b is 0, 1 or 2 and a+b is between 1 and 3,
  and (2i) optionally other siloxyl functional units of formula;

$$Z_c\ SiO_{\frac{4-c}{2}} \quad (1.2)$$

in which Z has the same meaning as above and c has a value of between 0 and 3.

10. Composition according to any one of claims 1 to 9, **characterized in that** the polyorganosiloxane (2) contains

(i) siloxyl functional units of formula:

$$H_dL_cSiO_{\frac{4-(d+e)}{2}} \quad (2.1)$$

in which:

- L is a monovalent hydrocarbon group, free of any action unfavourable to the activity of the catalyst and

selected from alkyl groups having from 1 to 8 carbon atoms inclusive, optionally substituted by at least one halogen atom, and as well as from aryl groups,

- d is 1 or 2, e is 0, 1 or 2, d+e has a value of between 1 and 3,

and (2i) optionally other siloxyl functional units of average formula:

$$L_g\ SiO_{\frac{4-g}{2}} \qquad (2.2)$$

in which L has the same meaning as above and g has a value of between 0 and 3.

**11.** Composition according to any one of claims 1 to 10, **characterized in that** the proportions of (1), (2) and (5) are such that the ratio of the number of hydrogen atoms linked to the silicon in the polyorganosiloxane (2) to the number of alkenyl radicals provided by the polyorganosiloxane (1) and the resin (5) is between 0.4 and 10.

**12.** Composition according to any one of claims 1 to 11, **characterized in that** the oil (1) has a viscosity at least equal to 1000 mPa.s at 25°C.

**13.** Composition according to any one of claims 1 to 12, **characterized in that** the oil (1) has a viscosity of between 5000 and 200,000 mPa.s.

**14.** Composition according to any one of claims 1 to 13, **characterized in that** the polyorganosiloxane resin (5) contains Q functional units.

**15.** Composition according to claim 14, **characterized in that** it contains at least 2% by weight of Q functional units.

**16.** Composition according to any one of claims 1 to 15, **characterized in that** it also contains one or more conventional additive(s).

**17.** Two-component system, a precursor of the composition according to any one of claims 1 to 16, **characterised;**

- **in that** it is in the form of two separate parts A and B, these being intended to be mixed together to form the composition,
- and **in that** one of these parts A and B contains the catalyst (3) and only one of the species, (1) or (2), of polyorganosiloxane,
- and **in that** part A or B containing the polyorganosiloxane (2) is free of compound (4.3) of the promoter (4) and part A or B which includes the compound (4.1) of the promoter (4) does not contain the catalyst (3),
- and **in that** the resin (5) may be employed in part A or part B or in both parts A and B, *and* that the catalyst (3) must not be present in the part A or B which contains the polyorganosiloxane (2) and the resin (5).

**18.** Woven, knitted or non-woven fibrous substrate, coated on one or both sides with a composition according to any one of claims 1 to 16 or with a two-component system according to claim 17,

**19.** Coated substrate according to claim 18, **characterized in that** the fibrous substrate is a fabric having an open construction and a porosity > 15 $l/dm^2/min$ according to the DIN 53 887 standard.

**20.** Coated substrate according to claim 18, **characterized in that** the composition contains an oil (1) having a viscosity of between 10,000 and 200,000 mPa.s at 25°C and a resin (5) containing Q functional units, in proportions at least equal to 2% by weight.

**21.** Coated substrate according to claim 19 or 20, **characterized in that** the weight of elastomer is less than or equal to 30 $g/m^2$,

**22.** Coated substrate according to claim 21, **characterized in that** it has a weight of less than or equal to 200 $g/m^2$.

**23.** Coated substrate according to claim 21, **characterized in that** it has a tear strength greater than or equal to 400 N.

**24.** Woven, knitted or non-woven fibrous substrate coated on one or both sides with an elastomer, which can be obtained by crosslinking a composition according to any one of claims 1 to 16, or a two-component system according to claim 17, **characterized in that** the elastomer has a relative density < 1.1, a thermal conductivity at 23°C ≤ 0.18 W/m.K and the ratio between the tear strength and the elongation at break of which is < 0.02, # and **in that** the substrate is a substrate having an open construction and a porosity > 15 l/dm$^2$/min according to the DIN 53 887 standard.

**25.** Coated substrate according to claim 24, **characterized in that** it comprises a coating of elastomer of thickness less than or equal to 30 g/m$^2$.

**26.** Coated substrate according to claim 25, having a weight of less than or equal to 200 g/m$^2$.

**27.** Coated substrate according to one of claims 24 to 26, **characterized in that** it has a tear strength greater than or equal to 400 N.

**28.** Airbag for protecting an occupant of a vehicle, formed from a coated fabric according to one of claims 18 to 27.

**29.** Use of the composition according to any one of claims 1 to 16 or of the precursor system according to claim 17, for coating woven, knitted or non-woven fibrous substrates.

**30.** Use according to claim 29, for coating substrates intended to form airbags for protecting the occupants of vehicles.

**31.** Use according to claim 29 or 30, for coating a fabric having an open construction and a porosity > 15 l/dm$^2$/min according to the DIM 53 887 standard.

**32.** Use of a crosslinking silicone composition, especially a composition of the cold-curing (RTV) type according to any one of claims 1 to 16, made of an elastomer having a relative density < 1.1, a thermal conductivity at 23°C ≤ 0.18 W/m.K and the ratio between the tear strength and the elongation at break of which is < 0.02, for coating a woven, knitted or non-woven fibrous substrate, especially for the purpose of producing airbags for protecting the occupants of vehicles.

**33.** Use according to claim 32, for coating a substrate having an open construction and a porosity > 15 l/dm$^2$/min according to the DIN 53 887 standard.